# EUROPEAN PATENT APPLICATION

(11) **EP 4 787 514 A1**
(43) Date of publication of application: **05.08.2026**
(21) Application number: 25203121.6
(22) Date of filing: 18.09.2025
(51) Int. Cl.: H01M 10/04, H01M 50/179, H01M 50/181, H01M 50/536, H01M 50/548, H01M 50/552, H01M 50/562, H01M 50/586, H01M 50/593, H01M 50/528

(54) **SECONDARY BATTERY AND METHOD OF MANUFACTURING THE SAME**

(30) Priority: 31.01.2025 KR 20250012574
(71) Applicant: SAMSUNG SDI CO., LTD., Yongin-si, Gyeonggi-do 17084 (KR)
(72) Inventor: Moon, Dongsik, 17084 Yongin-si, Gyeonggi-do (KR)
(74) Representative: Meissner Bolte Partnerschaft mbB

(57) **Abstract**

A secondary battery (10) includes an electrode assembly (200) comprising a first electrode (230), a second electrode (240), and a separator (250) interposed between the first electrode (230) and the second electrode (240); a case (120) comprising a sidewall portion (122) surrounding a side surface of the electrode assembly (200) and a cover portion (121) extending in a horizontal direction from one side of the sidewall portion (122) on the electrode assembly (200); a terminal plate (160) that closes a first opening formed at a center of the cover portion (121) and is electrically connected to the first electrode (230); and a base plate (180) that closes a second opening formed on another side of the sidewall portion (122) and is electrically connected to the second electrode (240), wherein the first electrode (230) comprises at least one first substrate tab (210) electrically connected to the terminal plate (160), and wherein the second electrode (240) comprises at least one second substrate tab (220) electrically connected to the base plate (180).

## Description

### BACKGROUND

### 1. Field

The present invention relates to a secondary battery and a method of manufacturing the same.

### 2. Description of the Related Art

Unlike primary batteries that are not designed to be (re)charged, secondary (or rechargeable) batteries are batteries that are designed to be discharged and recharged without damaging the battery. Low-capacity secondary batteries may be used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

Recently, wearable devices using Bluetooth technology, for example, wireless earphones and smart watches, have been advancing in technology. Accordingly, there is a growing consumer demand for ultra-compact secondary batteries depending on the usage environment. A secondary battery such as a coin cell is an example thereof.

In the case of an ultra-compact secondary battery, as its absolute size is reduced, technology for efficiently increasing energy density may be desirable. In particular, techniques that minimize empty space within the cell and fill the internal space at high density may be utilized.

The above information disclosed in this Background section is only for enhancement of understanding of the background and therefore the information discussed in this Background section does not necessarily constitute prior art.

### SUMMARY

The present invention relates to a secondary battery and a method of manufacturing the same, which address the aforementioned issues.

These and other aspects and features of embodiments according to the present invention will be described in or will be apparent from the following description of embodiments of the present invention.

According to the present invention, a secondary battery includes an electrode assembly including a first electrode, a second electrode, and a separator interposed between the first electrode and the second electrode, a case including a sidewall portion surrounding a side surface of the electrode assembly and a cover portion extending in a horizontal direction from one side of the sidewall portion on the electrode assembly, a terminal plate that closes a first opening formed at a center of the cover portion and is electrically connected to the first electrode, and a base plate that closes a second opening formed on another side of the sidewall portion and is electrically connected to the second electrode, wherein the first electrode includes at least one first substrate tab electrically connected to the terminal plate, and wherein the second electrode includes at least one second substrate tab electrically connected to the base plate.

According to some embodiments, the first electrode may include a first coated portion in which a first active material layer is located on a first substrate and a first uncoated portion, in which the first active material layer is absent, provided at both ends of the first coated portion, wherein the second electrode may include a second coated portion in which a second active material layer is located on a second substrate and a second uncoated portion, in which the second active material layer is absent, provided at both ends of the second coated portion, wherein the at least one first substrate tab protrudes from the first substrate of the first coated portion toward the terminal plate, and wherein the at least one second substrate tab protrudes from the second substrate of the second coated portion toward the base plate.

According to some embodiments, the at least one first substrate tab may include a first vertical portion extending in a vertical direction from the first coated portion and a first contact portion bent and extending from the first vertical portion, and wherein the at least one second substrate tab may include a second vertical portion extending in a vertical direction from the second coated portion and a second contact portion bent and extending from the second vertical portion.

According to some embodiments, a length of the first substrate tab in a winding direction of the electrode assembly is shorter than a length of the first coated portion in the winding direction, and wherein a length of the second substrate tab in the winding direction is shorter than a length of the second coated portion in the winding direction.

According to some embodiments, the length of the first substrate tab in the winding direction is shorter than the length of the second substrate tab in the winding direction.

According to some embodiments, the terminal plate overlaps the first substrate tab in a vertical direction, and wherein the first substrate tab is located inward of the terminal plate in the horizontal direction.

According to some embodiments, the first substrate tab extends closer to the terminal plate than the separator in a vertical direction, and wherein the second substrate tab extends closer to the base plate than the separator in the vertical direction.

According to some embodiments, the secondary battery further includes an insulator between the cover portion and the terminal plate and insulating the cover portion and the terminal plate.

According to some embodiments, the terminal plate may include a protrusion inserted into the first opening and a flange portion below the protrusion, and wherein the flange portion is between the electrode assembly and the cover portion.

According to some embodiments, the first substrate tab is connected to the terminal plate by welding, and wherein the second substrate tab is connected to the base plate by welding.

According to some embodiments, the base plate and the case may include stainless steel (SUS), and wherein the terminal plate may include aluminum (Al).

According to some embodiments, an outer side portion of the electrode assembly contacts the sidewall portion.

According to some embodiments, the sidewall portion and the cover portion are formed integrally.

According to the present invention, in a method of manufacturing a secondary battery, the method includes forming an electrode assembly including a first electrode, a separator, and a second electrode, electrically connecting the first electrode of the electrode assembly to a terminal plate, inserting the electrode assembly and the terminal plate into a case including a sidewall portion surrounding a side surface of the electrode assembly and a cover portion extending in a horizontal direction from one side of the sidewall portion on the electrode assembly, and coupling a base plate to an opening formed on another side of the sidewall portion and electrically connecting the second electrode to the base plate, wherein the first electrode includes at least one first substrate tab electrically connected to the terminal plate, and wherein the second electrode includes at least one second substrate tab electrically connected to the base plate.

According to some embodiments, forming the electrode assembly may include forming the first substrate tab, and wherein forming the first substrate tab may include removing a first portion from a region of a first substrate of the first electrode where a first active material layer is absent and leaving a second portion, and cutting the second portion at regular intervals to form the at least one first substrate tab.

According to some embodiments, forming the electrode assembly may include forming the second substrate tab, and wherein forming the second substrate tab may include removing a first portion from a region of a second substrate of the second electrode where a second active material layer is absent and leaving a second portion, and cutting the second portion at regular intervals to form the at least one second substrate tab.

According to some embodiments, electrically connecting the first electrode to the terminal plate may include bending the first substrate tab, and welding the bent first substrate tab to the terminal plate.

According to some embodiments, electrically connecting the second electrode to the base plate may include bending the second substrate tab, welding the bent second substrate tab to the base plate, and welding the base plate to the sidewall portion.

According to some embodiments, inserting the electrode assembly and the terminal plate into the case may include arranging the electrode assembly so that an outer side portion of the electrode assembly is in close contact with the sidewall portion.

According to some embodiments, inserting the electrode assembly and the terminal plate into the case may include arranging an insulator between the cover portion and the terminal plate, and applying heat to the cover portion and the terminal plate to close the first opening formed at a center of the cover portion.

Aspects of some embodiments of the present invention may provide a tab-less structure in which electrode tabs are not connected to the electrode assembly, thereby increasing the energy density of the secondary battery.

According to some embodiments of the present invention, because the electrode assembly has a structure in which the electrode tabs and cover tape are removed, the electrode assembly may be inserted into the secondary battery case in close contact.

According to some embodiments of the present invention, by removing the electrode tabs and cover tape in the electrode plate, an expanded coated portion area may be secured.

According to some embodiments of the present invention, because a larger coated portion area is secured, the capacity of the secondary battery may be increased.

According to some embodiments of the present invention, as the interior space of the secondary battery is utilized efficiently, an amount of electrolyte that can be charged in the secondary battery may increase, and the cell capacity of the secondary battery may increase.

According to some embodiments of the present invention, because the terminal plate includes a flange portion extending into the secondary battery, the internal pressure resistance of the secondary battery may be increased, thereby securing operational stability of the secondary battery.

However, the characteristics and features of embodiments according to the present invention are not limited to the above, and other aspects and features not mentioned will be clearly understood by those skilled in the art from the following detailed description.

### BRIEF DESCRIPTION OF THE DRAWINGS

The following drawings attached to this specification illustrate aspects of some embodiments of the present invention, and further describe aspects and features of embodiments according to the present invention together with the detailed description of the present invention. Thus, the present invention should not be construed as being limited to the drawings:
FIG. 1 is a schematic view illustrating a secondary battery according to some embodiments of the present invention.
FIG. 2 illustrates an exploded view of a secondary battery according to some embodiments of the present invention.
FIG. 3 is a cross-sectional view illustrating a secondary battery according to some embodiments of the present invention.
FIG. 4 is an enlarged view illustrating a portion (R) of FIG. 3 according to some embodiments of the present invention.
FIG. 5 illustrates an example of a terminal plate according to some embodiments of the present invention.
FIG. 6 illustrates an example of a first electrode before forming a first substrate tab according to some embodiments of the present invention.
FIG. 7 illustrates an example of a first electrode after forming a first substrate tab according to some embodiments of the present invention.
FIG. 8 illustrates an example of a second electrode before forming a second substrate tab according to some embodiments of the present invention.
FIG. 9 illustrates an example of a second electrode after forming a second substrate tab according to some embodiments of the present invention.
FIG. 10 illustrates an example of a secondary battery before and after bending a first substrate tab according to some embodiments of the present invention.
FIG. 11 illustrates an example in which, along a winding direction of the electrode assembly, the first substrate tab is electrically connected to the terminal plate according to some embodiments of the present invention.
FIG. 12 illustrates an example of a secondary battery before and after bending a second substrate tab according to some embodiments of the present invention.
FIG. 13 illustrates an example in which, along a winding direction of the electrode assembly, the second substrate tab is electrically connected to the base plate according to some embodiments of the present invention.
FIG. 14 illustrates an example in which the base plate and a sidewall portion of a case are electrically coupled by welding according to some embodiments of the present invention.
FIG. 15 is a view illustrating, as seen from a vertical direction, a state in which an electrode assembly is accommodated in a case.
FIG. 16 is a flowchart illustrating an example of a method of manufacturing a secondary battery according to some embodiments of the present invention.

### DETAILED DESCRIPTION

Hereinafter, aspects of some embodiments of the present invention will be described, in more detail, with reference to the accompanying drawings. The terms or words used in the present specification and claims are not to be limitedly interpreted as general or dictionary meanings and should be interpreted as meanings and concepts that are consistent with the technical idea of the present invention on the basis of the principle that an inventor can be his/her own lexicographer to appropriately define concepts of terms to describe his/her invention in the best way.

The embodiments described in this specification and the configurations shown in the drawings are only some of the embodiments of the present invention and do not represent all of the technical spirit, aspects, and features of the present invention. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present invention relates to "one or more embodiments of the present invention." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present invention and is not intended to be limiting of the present invention. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be located in contact with (e.g., contacting) the upper (or lower) surface of the element, and another element may also be interposed between the element and the arbitrary element located on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

According to some embodiments, the secondary battery may be a coin-type battery (coin cell) or a button-type battery (button cell); however, the invention is not limited thereto and may instead be a cylindrical or pin-type battery.

A coin-type or button-type battery is generally a thin, coin- or button-shaped cell whose height-to-diameter ratio (H/D) is 1 or less, although the ratio need not be strictly limited to this value. Because such batteries are typically cylindrical, their horizontal cross-section is often circular; however, the term also encompasses variants whose horizontal cross-section is elliptical or polygonal. Here, "diameter" refers to the maximum distance measured in the horizontal direction of the battery, and "height" refers to the maximum distance measured in the vertical direction of the battery (i.e., the distance from the flat bottom surface to the flat top surface).

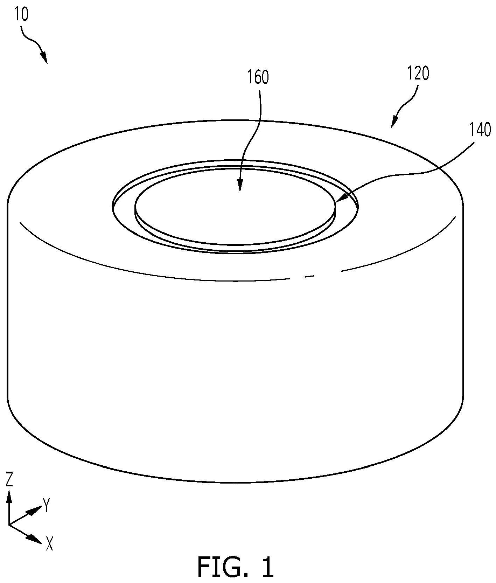

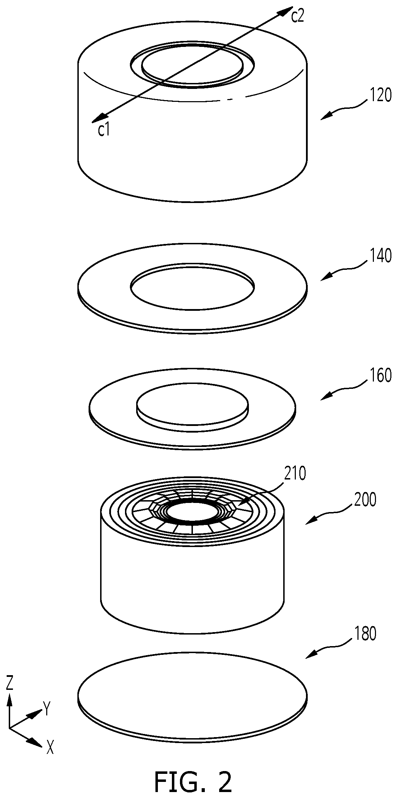

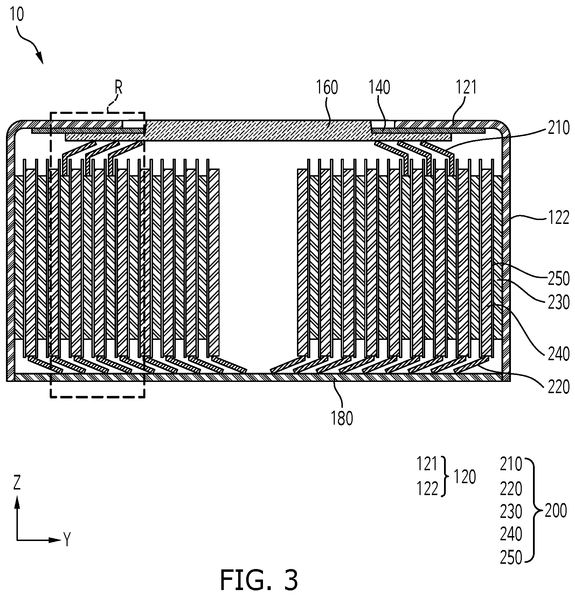

FIG. 1 is a schematic view illustrating a secondary battery 10 according to some embodiments of the present invention. FIG. 2 illustrates an exploded view of the secondary battery according to some embodiments of the present invention. FIG. 3 is a cross-sectional view illustrating the secondary battery according to some embodiments of the present invention.

In FIGS. 1 to 3, the structure and sub-configurations of a secondary battery 10 according to some embodiments of the present invention are illustrated. According to FIG. 2, the secondary battery 10 includes a case 120, an electrode assembly 200 inserted into the case 120, at least one first substrate tab 210 included in the electrode assembly 200 and electrically connected to a terminal plate 160, at least one second substrate tab 220 included in the electrode assembly 200 and electrically connected to a base plate 180, the terminal plate 160 and the base plate 180. Additionally, the secondary battery 10 may further include an insulator 140 for insulating between the case 120 and the terminal plate 160. FIG. 3 is a cross-sectional view of the secondary battery 10 taken along the imaginary line c1-c2 of FIG. 2. At the lower left side of FIG. 1, a virtual directional reference is shown for understanding: a first direction (X direction), a second direction (Z direction) perpendicular to the first direction, and a third direction (Y direction) perpendicular to both the first direction and the second direction.

According to some embodiments of the present invention, the case 120 may include a sidewall portion 122 that surrounds a side surface of the electrode assembly 200, and a cover portion 121 that extends in a horizontal direction from one side of the sidewall portion 122 and is located on the electrode assembly. The cover portion 121 may include a first opening, and the first opening may receive the terminal plate 160 or the insulator 140 so that the outer shape of the secondary battery 10 is completed. Although the first opening may be formed at a center of the cover portion 121, it is not limited thereto, and may be shifted to another location from the center. For example, the first opening may be offset a distance (e.g., a set or predetermined distance) to the left from the center of the cover portion 121. According to some embodiments, the sidewall portion 122 may surround a side surface of the electrode assembly 200 and form an outer side portion of the secondary battery. The sidewall portion 122 may be integrally formed with the cover portion 121. Thus, unlike an alternative cap assembly, the secondary battery may have an integrated upper case structure. However, the sidewall portion 122 and the cover portion 121 may also be formed separately and then coupled to each other. Moreover, the sidewall portion 122 may have a shape other than the cylindrical structure shown in FIG. 1, for example, a shape with a curved cross section. Although FIG. 1 illustrates that the case 120 has a cylindrical shape for the secondary battery, the shape of the secondary battery is not limited thereto and may be prismatic or pouch-shaped.

The electrode assembly 200 according to the present invention includes a first electrode 230, a second electrode 240, and a separator 250 interposed between the first electrode 230 and the second electrode 240. The first electrode 230, the second electrode 240, and the separator 250 are wound to form a jelly-roll structure that is housed in the case 120. Additionally, in order to insulate between the case 120 and the jelly roll, the jelly-roll electrode assembly 200 may further include an insulating layer on its surface. An outer side portion of the electrode assembly 200 may be located in close contact with (e.g., contacting) the sidewall portion 122 of the case 120, which increases the amount of electrolyte chargeable inside the secondary battery and thereby increases the cell capacity of the secondary battery.

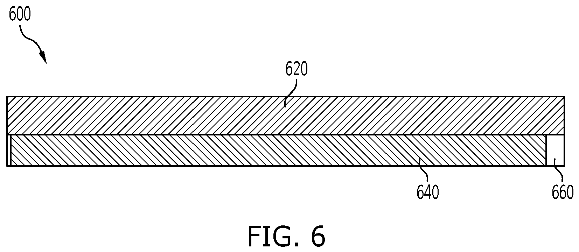

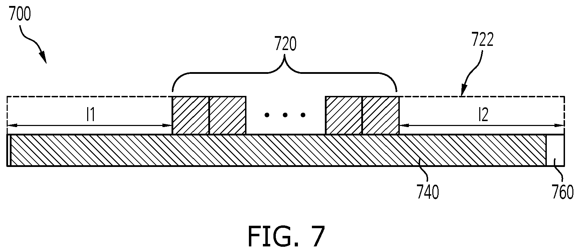

According to some embodiments, the first electrode 230 of the electrode assembly 200 may function as a positive electrode. The first electrode 230 may include a first substrate made of a metal such as aluminum (Al), a first coated portion on which a first active material layer (e.g., a transition metal oxide) is located, and a first uncoated portion, where the first active material layer is absent, provided at both ends of the first coated portion. Also, the first electrode may include at least one first substrate tab 210 electrically connected to the terminal plate 160. A detailed description of the subconfiguration of the first electrode other than the first substrate tab is provided below with reference to FIGS. 6 and 7.

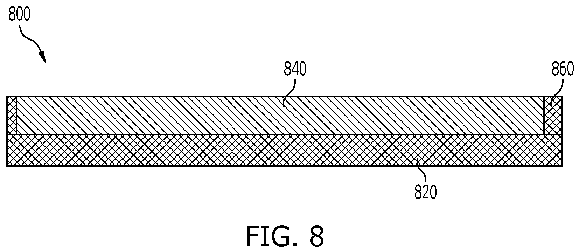

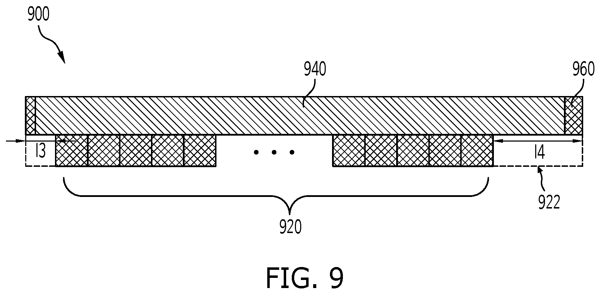

According to some embodiments, the second electrode 240 of the electrode assembly 200 may function as a negative electrode. The second electrode 240 may include a second substrate made of a metal such as copper (Cu) or nickel (Ni), a second coated portion on which a second active material layer (e.g., graphite) is located, and a second uncoated portion, where the second active material layer is absent, provided at both ends of the second coated portion. Also, the second electrode may include at least one second substrate tab 220 electrically connected to the base plate 180. A detailed description of the subconfiguration of the second electrode other than the second substrate tab is provided below with reference to FIGS. 8 and 9.

According to some embodiments of the present invention, the first substrate tab 210 may extend outward from the first substrate of the first electrode 230 toward the terminal plate 160 and electrically connect the first electrode 230 and the terminal plate 160. For example, the first substrate tab 210 may be connected by welding to the terminal plate 160, although it is not limited to welding, and any other suitable connecting technique may be utilized. In this manner, the secondary battery 10 may adopt a tab-less structure in which no additional electrode tab is provided, so that the electrode assembly 200 may be inserted in close contact with the case 120 and an expanded coated portion area may be secured, thereby increasing the battery capacity.

According to some embodiments of the present invention, the second substrate tab 220 may extend outward from the second substrate of the second electrode 240 and protrude toward the base plate 180, thereby electrically connecting the second electrode 240 and the base plate 180. For example, the second substrate tab 220 may be connected by welding to the base plate 180, although it is not limited to welding. Therefore, the second substrate tab 220 may have a structure that protrudes in the opposite direction to the first substrate tab 210. Consequently, as with the effect of the first substrate tab 210 mentioned above, the capacity of the secondary battery can be increased.

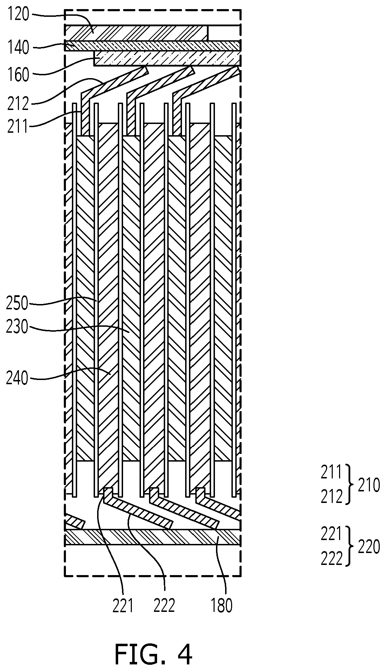

Referring to FIGS. 2 and 3, the first substrate tab 210 and the second substrate tab 220 of the electrode assembly 200 may have a bent structure toward the center of the secondary battery 10 and may be electrically connected to the terminal plate 160 or the base plate 180, respectively. However, the shapes of the first substrate tab and the second substrate tab are not limited thereto. For example, the first substrate tab 210 and the second substrate tab 220 may extend perpendicularly from the first substrate or the second substrate without bending and be connected to the terminal plate 160 or the base plate 180. A detailed description of the structures and features of the first and second substrate tabs follows, with reference to FIG. 4.

Referring to FIGS. 2 and 3, according to some embodiments, a length of the first substrate tab 210 in the winding direction of the electrode assembly 200 may be shorter than a length of the second substrate tab 220 in the winding direction. This is due to the structure of the terminal plate 160 that is part of the internal structure of the secondary battery 10, which prevents or reduces direct contact between the terminal plate 160 and the case 120. However, the arrangement shown in FIG. 3 is merely illustrative, and the length of the first substrate tab 210 in the winding direction may be greater toward the center of the electrode assembly 200 or toward its edge. In another example, the length of the second substrate tab 220 in the winding direction may be shorter than that shown in FIG. 3.

According to some embodiments, the terminal plate 160 may overlap the first substrate tab 210 in the vertical direction (which may be the second direction). Thus, when electrically connecting the first electrode 230 and the terminal plate 160, the first substrate tab 210 and the terminal plate 160 may be electrically connected (e.g., welded) in the winding direction of the electrode assembly 200 from an upper portion of the terminal plate 160 in the vertical direction.

According to some embodiments, the first substrate tab 210 may be located inward of the terminal plate 160 in the horizontal direction. Referring to FIG. 3, both ends of the terminal plate 160 protrude outward in the third direction (Y direction) beyond the first substrate tab 210. Accordingly, the first substrate tab 210 may be prevented from contacting an external terminal or the case 120 and causing an internal short circuit. However, the arrangement is not limited to FIG. 3, and the first substrate tab 210 may be located outward relative to the protruding portions at both ends of the terminal plate 160. In that case, to prevent or reduce shorts caused by the tab protruding outward, an external insulating layer or the like may be further included in the electrode assembly 200.

According to some embodiments, in the vertical direction, the first substrate tab 210 may extend closer to the terminal plate 160 than to the separator 250. Thus, the first substrate tab 210 can be electrically connected to the terminal plate 160. Likewise, according to some embodiments, the second substrate tab 220 may extend closer to the base plate 180 than to the separator 250 in the vertical direction. Similarly to the first substrate tab, the second substrate tab 220 may thus be electrically connected to the base plate 180.

According to some embodiments of the present invention, the terminal plate 160 closes the first opening formed in the cover portion 121 and is electrically connected to the first electrode 230. Thus, the terminal plate may act as an external positive electrode connected to the internal positive electrode. As shown in FIGS. 2 and 3, the terminal plate 160 may include a flange portion at a lower side and a protrusion at an upper side. The lower flange portion may be electrically connected to the first substrate tab 210. Thus, the secondary battery having this structure can increase its internal pressure resistance, thereby ensuring operational stability of the secondary battery. However, the structure of the terminal plate 160 is not limited to this arrangement, and the terminal plate 160 could have the flange portion at the upper side and the protrusion at the lower side. In that case, the first substrate tab 210 may be electrically connected to the protrusion at the lower side.

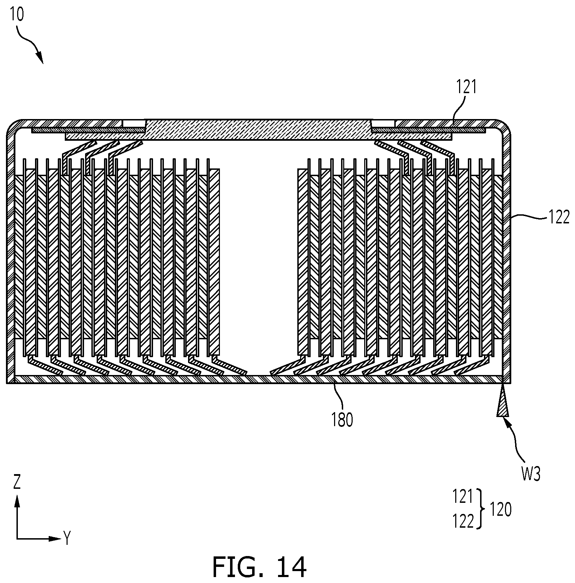

According to some embodiments of the present invention, the base plate 180 closes the second opening formed on the other side of the sidewall portion 122 of the case and is electrically connected to the second electrode 240, thereby functioning as an external negative electrode connected to the internal negative electrode, similar to how the terminal plate 160 functions. The base plate 180 may also be electrically connected to the sidewall portion 122 of the case. For example, the base plate 180 may be electrically connected to the case 120 by welding, although it is not limited thereto. They may also be electrically connected by physically inserting a component such as a rivet. An example of electrically connecting the base plate and the case by welding is shown in FIG. 14.

According to some embodiments of the present invention, the secondary battery 10 may additionally include the insulator 140 located between the cover portion 121 and the terminal plate 160 to insulate the cover portion 121 from the terminal plate 160. FIGS. 1 through 3 illustrate an example in which the terminal plate is accommodated inside the secondary battery 10. The insulator 140 may include a material such as polypropylene, nylon, or silicone (Si), for example, for the purpose of providing electrical insulation between the case 120 and the terminal plate 160, which serve as different external electrodes. However, it is not limited to such materials, and any insulation material with electrical insulating properties and chemical stability can be used. Thus, the insulator 140 may prevent or reduce electrical short circuits between the case 120 and the terminal plate 160, securing the safety of the secondary battery. According to some embodiments, the insulator 140 may be sandwiched between the cover portion 121 and the terminal plate 160 under a certain pressure. However, the method of forming the insulator is not limited thereto; for example, an insulating coating layer formed by a coating method may be used instead of a physically formed or arranged insulator.

According to some embodiments of the present invention, the case 120 and the base plate 180 may include stainless steel (SUS). However, they are not limited thereto and may include any electrically conductive material that does not cause side reactions with the electrolyte, for example aluminum, aluminum alloy, or steel plated with nickel. According to some embodiments, the terminal plate 160 may include aluminum (Al). However, like the case 120 and the base plate 180, the terminal plate 160 may be made of copper (Cu), nickel foil, or another metal commonly used in the field.

FIG. 4 is an enlarged view of the portion (R) of FIG. 3 according to some embodiments of the present invention.

Referring to FIG. 4, a portion of the electrode assembly 200 and the structures of the case 120, the base plate 180, and the terminal plate 160, and their coupling relationships, are shown. Also, the sequential winding structure of the first electrode 230, the separator 250, and the second electrode 240 included in the electrode assembly 200 is shown, as well as the stacked structure of the case 120, the insulator 140, and the terminal plate 160. Specifically, the description of FIG. 4 below focuses on the relationship in which the first substrate tab 210 and the second substrate tab 220 are each electrically coupled to the terminal plate 160 and the base plate 180.

According to some embodiments of the present invention, the first substrate tab 210 may extend in a vertical direction from the first substrate of the first electrode 230 and be electrically connected (e.g., by welding or another method) to the terminal plate 160. As shown in FIG. 4, the first substrate tab 210 may be bent toward the center of the secondary battery, reducing the space it occupies in the vertical direction inside the secondary battery and maximizing or relatively increasing the internal space utilization. However, the first substrate tab 210 need not be bent and may extend straight in a vertical direction from the first substrate to be electrically connected to the terminal plate 160.

According to some embodiments, the first substrate tab 210 may include a first vertical portion 211 that extends vertically from the first coated portion and a first contact portion 212 that is bent at the first vertical portion 211 and extends toward the center of the secondary battery. For instance, after the first vertical portion 211 is formed, a press machine may mechanically bend it to form the first contact portion 212. However, without limitation to this, in various embodiments of the present invention, the first vertical portion 211 may directly connect electrically to the terminal plate 160 without the first contact portion 212.

According to some embodiments of the present invention, the second substrate tab 220 may extend in a vertical direction from the second substrate of the second electrode 230 and be electrically connected to the base plate 180, for example, by welding or another method. The second substrate tab 220 may extend in a direction opposite to the first substrate tab 210. Also, as shown in FIG. 4, the second substrate tab 220 may be structured to bend toward the center of the secondary battery. Similar to the first substrate tab 210, this structure reduces the length occupied in the vertical direction by the second substrate tab 220 inside the secondary battery and maximizes or relatively improves the internal space efficiency. However, it is not limited thereto, and the second substrate tab 220 need not be bent and may be electrically connected to the base plate 180 in a state extending straight in a vertical direction from the second substrate inside the secondary battery.

According to some embodiments, the second substrate tab 220 may include a second vertical portion 221 extending in a vertical direction from the second coated portion, and a second contact portion 222 that is bent from the second vertical portion 221 toward the center of the secondary battery. For example, after the second vertical portion 221 is formed, a press machine may bend it to form the second contact portion 222. However, according to various embodiments of the present invention, the second contact portion 222 need not be provided if the second vertical portion 221 directly connects electrically to the base plate 180.

According to some embodiments of the present invention, the first substrate tab 210 and the second substrate tab 220 may replace a conventional electrode tab. Thus, space in the secondary battery occupied by the electrode tab and cover tape may be removed, and the electrode assembly 200 may have a shape close to a circular circle when viewed from the vertical direction. This can maximize or relatively improve the spatial efficiency of the internal structure of the secondary battery.

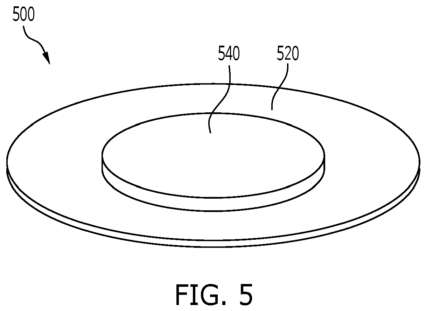

FIG. 5 illustrates an example of a terminal plate 500 according to some embodiments of the present invention. The terminal plate 500 shown in FIG. 5 may be substantially the same as the terminal plate 160 of FIGS. 1 through 3.

Referring to FIG. 5, the terminal plate 500 may include a protrusion 540 inserted into a first opening formed at a center of the case, and a flange portion 520 located below the protrusion 540. This differs from a conventional stainless steel secondary battery terminal plate in that it has a different shape for electrically connecting a first substrate tab of a first electrode that functions as a positive electrode. With this structure, the flange portion 520 may be electrically connected to the first substrate tab (for example, by welding), enabling the terminal plate 500 to serve as an external positive electrode. Furthermore, the flange portion 520 at the lower side may increase the internal pressure resistance of the secondary battery and secure operational stability. Accordingly, because the secondary battery may have a tab-less structure without electrode tabs and cover tape, the energy density of the secondary battery may be increased. Also, because the coated portion area of the electrode plate is increased, the capacity of the secondary battery may be maximized or relatively improved.

However, as described above, the internal structure of the terminal plate 500 is not limited to that shown in FIG. 5. For example, as long as the terminal plate 500 can be electrically connected to the first electrode, the flange portion 520 may be located above the protrusion 540 in the same manner as in a conventional design. As another example, a terminal plate with a cylindrical structure where the protrusion 540 and flange portion 520 are not separated may be inserted into the first opening.

FIG. 6 illustrates an example of a first electrode 600 before forming a first substrate tab according to some embodiments of the present invention. FIG. 7 illustrates an example of a first electrode 700 after forming a first substrate tab 720 according to some embodiments of the present invention. FIG. 8 illustrates an example of a second electrode 800 before forming a second substrate tab according to some embodiments of the present invention. FIG. 9 illustrates an example of a second electrode 900 after forming a second substrate tab 920 according to some embodiments of the present invention.

Referring to FIGS. 6 and 7, the first electrode 600, 700, which may function as a positive electrode, is shown along with a first coated portion 640, 740 where a first active material layer is placed, a first uncoated portion 660, 760 where the first active material layer is absent, and a region 620 of the first substrate extending in a vertical direction from the first coated portion, and a first substrate tab 720. However, the lengths and structures of the first electrode 600, 700 and its subcomponents shown in FIGS. 6 and 7 are not limited to those shown. For example, the first coated portion 640, 740 could extend further downward.

According to some embodiments, the first coated portion 640, 740 is located on the first electrode 600, 700 and may include a first active material layer. The first coated portion may be formed by coating a positive electrode active material such as a transition metal oxide onto the first substrate when manufacturing the first electrode. For example, the first active material layer may be placed on the first substrate by a coating method. According to some embodiments, the first uncoated portion 660, 760, where the active material layer is absent, may be formed at both ends of the first coated portion.

Referring to FIG. 7, the first electrode 700 according to some embodiments of the present invention may include at least one first substrate tab 720. FIG. 7 shows the region 620 of the first substrate of the first electrode 600 in FIG. 6 that extends in the vertical direction, which is then notched to form the first substrate tab 720. According to some embodiments, a first portion 722 of the region of the first electrode 600 where the first active material layer is absent may be removed, leaving a second portion. The second portion may be cut at intervals (e.g., set or predetermined intervals) to form at least one first substrate tab 720. To ensure process efficiency and/or process consistency, a length (e.g., a set or predetermined length) (l1, l2) of the first portion 722 may be removed and then one or more first substrate tabs 720 may be formed. However, because the length to be cut for forming the first substrate tab is set or predetermined for process standardization, if the first electrode is formed otherwise, the cut length need not be predetermined.

Referring to FIGS. 8 and 9, the second electrode 800, 900, which may function as a negative electrode, is shown along with a second coated portion 840, 940 where a second active material layer is placed, a second uncoated portion 860, 960 where the second active material layer is absent, a region 820 of the second substrate extending in a vertical direction from the second coated portion, and a second substrate tab 920. However, the lengths and structures of the second electrode 800, 900 and its subcomponents shown in FIGS. 8 and 9 are not limited thereto. For example, the second coated portion 840, 940 could extend further upward.

According to some embodiments, the second coated portion 840, 940 is located on the second electrode 800, 900 and may include a second active material layer. The second coated portion may be formed by coating a negative electrode active material, such as graphite, onto the second substrate when manufacturing the second electrode. For example, the second active material layer may be placed on the second substrate by a coating method. According to some embodiments, the second uncoated portion 860, 960, where the active material layer is absent, may be formed at both ends of the second coated portion.

Referring to FIG. 9, the second electrode 900 according to some embodiments of the present invention may include at least one second substrate tab 920. FIG. 9 shows the region 820 of the second substrate of the second electrode 800 in FIG. 8 that extends in the vertical direction, which is then notched to form the second substrate tab 920. According to some embodiments, a first portion 922 of the region of the second electrode 900 where the second active material layer is absent may be removed, leaving a second portion. The second portion may be cut at intervals (e.g., set or predetermined) intervals to form at least one second substrate tab 920. For process efficiency, a length (e.g., a set or predetermined length) (l3, l4) of the notched portion 922 may be removed so that one or more second substrate tabs 920 can be formed. Likewise, because the length to be cut for forming the second substrate tab is set or predetermined for process standardization, if the second electrode is formed otherwise, the cut length need not be predetermined.

According to some embodiments, the lengths (e.g., set or predetermined lengths) (l3, l4) for cutting and forming the second substrate tab may be shorter than the lengths (e.g., set or predetermined lengths) (l1, l2) for cutting and forming the first substrate tab. As a result, after winding the electrode assembly, the length of the first substrate tab 720 in the winding direction of the electrode assembly may be shorter than the length of the second substrate tab 920 in the winding direction. As described above with reference to FIGS. 1 to 4, this enables a terminal plate extending into the interior of the secondary battery to be formed without causing a short circuit with the case of the secondary battery, allowing it to be electrically connected to the first substrate tab 720.

According to some embodiments, after the electrode assembly is wound, the length of the first substrate tab 720 in the winding direction of the electrode assembly may be shorter than the length of the first coated portion 640, 740 in the winding direction. Also, the length of the second substrate tab 920 in the winding direction of the electrode assembly may be shorter than the length of the second coated portion 840, 940 in the winding direction.

According to some embodiments, because the first substrate tab 720 and the second substrate tab 920 may be formed without requiring any separate electrode tab or cover tape in the first uncoated portion, the length of the first uncoated portion may be significantly reduced compared to the conventional length, or may not exist at all. Therefore, by securing a larger area for the coated portion, the capacity of the secondary battery can be increased.

The shapes of the first substrate tab 720 and the second substrate tab 920, as shown and described in detail in FIGS. 6 through 9, are not limited thereto. So long as the substrate tabs can be electrically connected to the base plate and terminal plate serving as external electrodes, the number and shape of the substrate tabs may vary. For example, unlike what is shown in FIG. 9, the second substrate tab could be formed in a rhombus shape with a narrower width at the bottom compared to the top. As another example, multiple first substrate tabs may be formed at a certain interval, separated from each other.

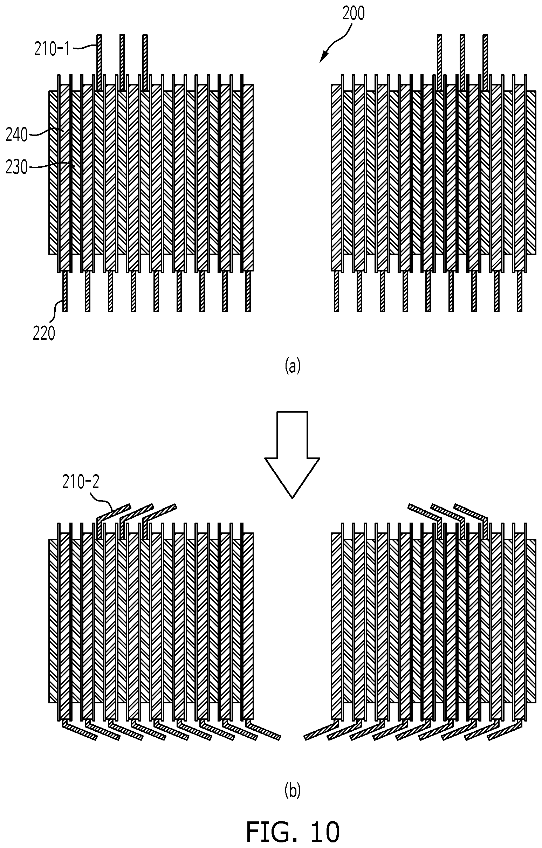

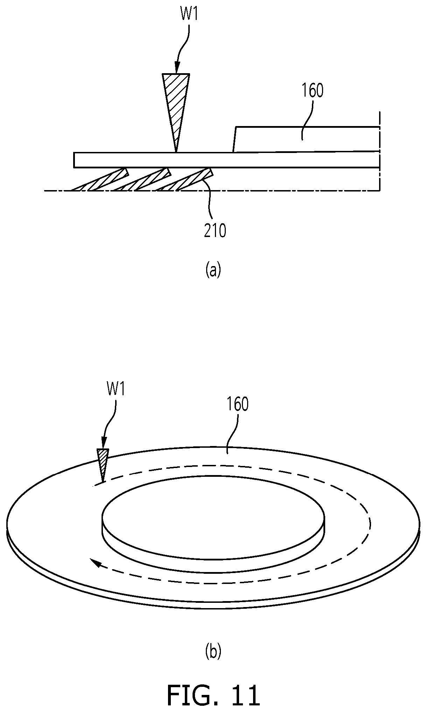

FIG. 10 illustrates an example of a secondary battery before and after bending a first substrate tab according to some embodiments of the present invention. FIG. 11 illustrates an example in which, along a winding direction of the electrode assembly, the first substrate tab is electrically connected to the terminal plate according to some embodiments of the present invention.

Referring to FIG. 10, a transition is shown before the electrode assembly 200 is electrically connected to the terminal plate, from the unbent first substrate tab 210-1 to the bent first substrate tab 210-2. FIG. 10 also depicts the lower structure of the electrode assembly 200, which includes a second substrate tab 220, a first electrode 230, a second electrode 240, and the separator 250. FIGS. 10 and 11 focus on the bending process of the first substrate tab 210 and the method of electrically connecting the first electrode 230 to the terminal plate 160.

Referring to (a) in FIG. 10, before bending, the first substrate tab 210-1 may extend in a vertical direction from the first electrode 230. Referring to (b) in FIG. 10, after bending, the bent first substrate tab 210-2 is formed by mechanically bending (e.g., using a press or bending machine) the portion of the first substrate tab 210-1 that extended vertically from the first substrate so that it faces toward the center of the secondary battery. For example, a press or bending machine may apply a physical force on a specific part of the portion that extends vertically, bending it toward the center to form the first substrate tab 210-2. In this way, the first substrate tab 210 is electrically connected to the terminal plate so that the terminal plate can function as an external electrode. Moreover, the vertical space occupied by the first substrate tab 210 is reduced, thereby preserving internal capacity in the secondary battery. However, as stated above, the first substrate tab 210 need not be bent toward the center of the secondary battery and may be directly electrically connected to the terminal plate 160, in which case the bending process shown in FIG. 10 may be omitted.

As shown in FIG. 11, the first substrate tab 210 is electrically connected to the terminal plate 160. According to some embodiments, the electrical connection may be achieved by welding using a welding apparatus W1. However, the connection method is not limited to welding. It may include any method that enables an electrical connection without damaging the metal surface or the first substrate tab, such as ultrasonic bonding, in which ultrasonic energy is used to locally heat and press the metal surface and the first substrate tab 210 to couple them together.

Referring to (b) in FIG. 11, the welding apparatus W1 may electrically connect the first substrate tab 210 and the terminal plate 160 along the winding direction of the electrode assembly. Accordingly, every first substrate tab 210 formed on the first electrode wound in the winding direction of the electrode assembly may be electrically connected to the terminal plate 160. Although (b) in FIG. 11 seems to show a fixed welding direction and number of welds, it is not limited to such an arrangement. For example, the welding direction could be set along a line where the first substrate tab 210 overlaps the terminal plate in a direction parallel to the vertical direction.

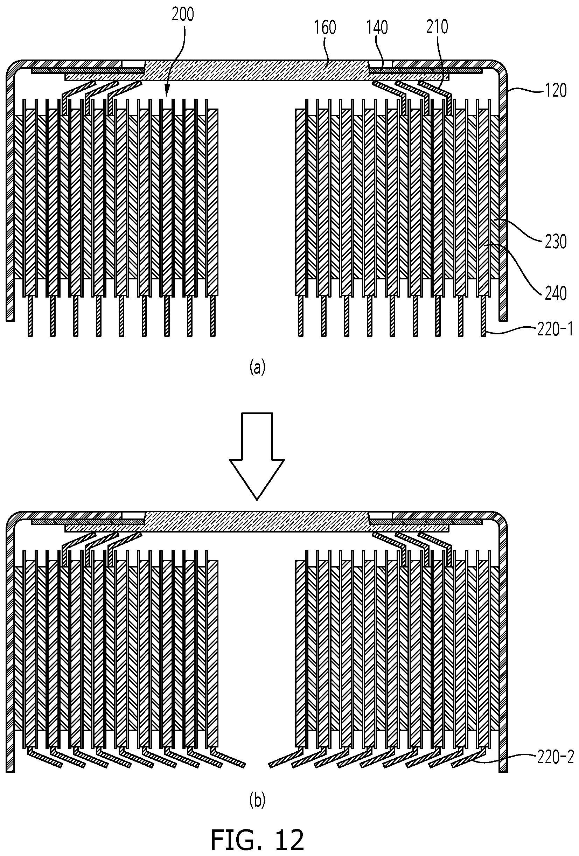

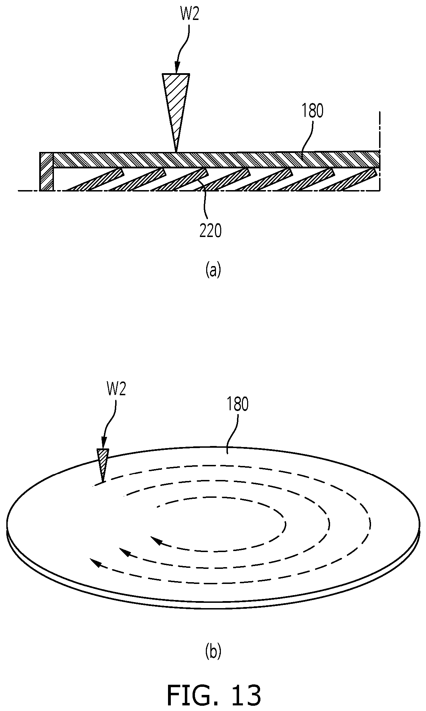

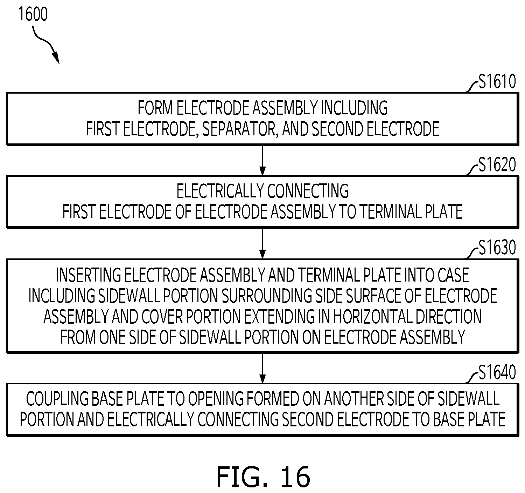

FIG. 12 illustrates an example of a secondary battery before and after bending a second substrate tab according to some embodiments of the present invention. FIG. 13 illustrates an example in which, along a winding direction of the electrode assembly, the second substrate tab is electrically connected to the base plate according to some embodiments of the present invention. FIG. 14 illustrates an example in which the base plate and a sidewall portion of the case are electrically coupled by welding according to some embodiments of the present invention. Specifically, FIGS. 12 through 14 may depict a situation in which the insulator 140 and the case 120 are additionally coupled to the electrode assembly and the terminal plate described with respect to FIGS. 10 and 11. In other words, the electrode assembly 200 and the terminal plate 160 in FIGS. 12 through 14 may be substantially identical to those described with respect to FIGS. 10 and 11. A detailed description of how the insulator 140 and the case 120 are coupled in manufacturing the secondary battery is provided below with reference to FIG. 16.

Referring to FIG. 12, a transition is shown before the electrode assembly 200 is electrically connected to the terminal plate, from the unbent second substrate tab 220-1 to the bent second substrate tab 220-2. FIG. 12 also shows the lower structure of the electrode assembly 200, which includes the first substrate tab 210, the first electrode 230, the second electrode 240, and the separator 250. FIGS. 12 through 14 focus on the bending process of the second substrate tab 220, the method of electrically connecting the second electrode 240 to the base plate 180, and the method of coupling the base plate 180 to the sidewall portion 122 of the case.

Referring to FIGS. 12 to 14, it is illustrated that the process of electrically coupling the second electrode 240 to the base plate 180 and the process of coupling the base plate to the case sidewall portion 122 are carried out at the lower end of the case. However, such illustration is provided merely for ease of explanation, and during the actual coupling process, the secondary battery may be inverted in the vertical direction to facilitate coupling. For example, the secondary battery may be flipped so that the base plate 180 faces upward, and then the coupling process may be performed.

Referring to (a) in FIG. 12, a second substrate tab 220-1 prior to bending may extend in a vertical direction from the first electrode 230. Referring to (b) in FIG. 12, after bending, the second substrate tab 220-2 may be bent such that the previously vertically extending part from the second substrate is directed toward the center of the secondary battery, possibly by mechanical methods such as pressing or bending. For example, a press machine or a bending machine may apply physical force toward the center of the secondary battery on the portion of the second substrate that extends vertically, thereby mechanically bending the second substrate tab 220-1. As a result, the second substrate tab 220 is electrically connected to the base plate, enabling the base plate to function as an external electrode. In addition, the portion of the second substrate tab 220 that occupies the vertical direction within the secondary battery is reduced, thereby securing internal capacity. However, as described above, the second substrate tab 220 need not necessarily be bent toward the center of the secondary battery and may instead be directly connected to the base plate in an electrically conductive manner. In that case, the bending process of the second substrate tab 220 described in FIG. 12 may be omitted.

FIG. 13 shows a process in which the second substrate tab 220 is electrically connected to the base plate 180. According to some embodiments, the electrical connection may be achieved by welding using a welding apparatus W2. However, the connection method is not limited to welding and may include any method that can form an electrical connection without damaging the metal surface or the second substrate tab, for example cold welding, which uses high pressure without heat to form an atomic bond.

Referring to FIG. 13(b), the welding apparatus W2 may electrically connect the second substrate tab 220 and the base plate 180 along the winding direction of the electrode assembly. Accordingly, every second substrate tab 220 formed on the second electrode wound in the winding direction of the electrode assembly may be electrically connected to the base plate 180. Although FIG. 13(b) seems to show a fixed welding direction and number of welds, it is not limited thereto. For example, the welding direction may be set along a line where the second substrate tab 220 overlaps the base plate in a direction parallel to the vertical direction.

FIG. 14 illustrates a process in which the base plate 180 and the sidewall portion 122 of the case are electrically connected. This may be performed by welding using a welding apparatus W3, but is not limited thereto. For example, they may be physically coupled by a rivet. In this way, the case 120 and the base plate 180 are electrically connected so that the base plate 180, which is electrically connected to the second substrate tab 220, and the case 120 may simultaneously function as an external electrode. Also, when the base plate 180 is coupled to the case 120, the second opening formed at the other side of the sidewall portion 122 may be closed. Accordingly, a coin-type battery may have an exterior structure that seals the secondary battery and accommodates the electrode assembly.

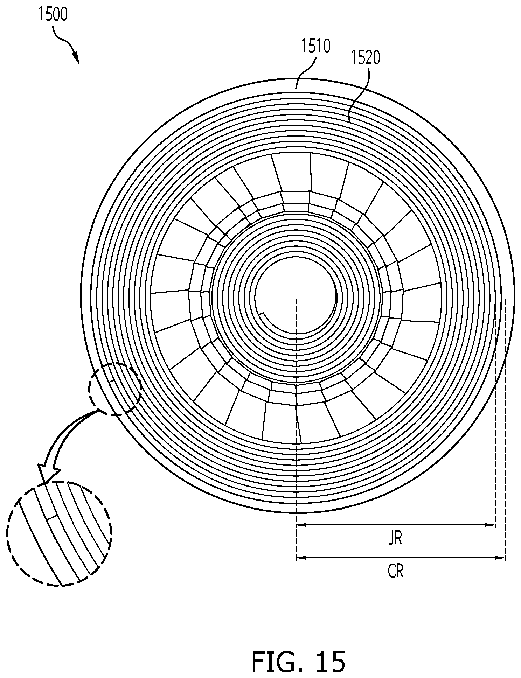

FIG. 15 is a view illustrating, as seen from a vertical direction, a state in which an electrode assembly 1520 is accommodated in a case 1510.

Referring to FIG. 15, an arrangement is shown in which the electrode assembly 1520 is located in close contact with (e.g., contacting) the sidewall portion of the case 1510, and a partial enlarged view shows a portion where the electrode assembly 1520 is in close contact. Also, FIG. 15 shows a radius JR of the electrode assembly 1520 and a radius CR inside the sidewall portion of the case 1510, measured from the center of the secondary battery.

According to some embodiments, the electrode assembly 1520 is located in close contact with (e.g., contacting) the sidewall portion of the case 1510, allowing it to have a shape close to a circle when viewed from the vertical direction. Accordingly, the amount of electrolyte that can be charged inside the secondary battery may increase, thereby increasing the cell capacity of the secondary battery. The space usage of such a secondary battery may be evaluated by the 'circularity ratio,' which is the ratio of the radius (JR) of the electrode assembly to the radius (CR) of the interior of the case sidewall portion, according to Equation (1) below. Circularity = (radius of the smallest circumscribed circle - radius of the smallest inscribed circle) / (radius of the smallest circumscribed circle)

Here, the closer the circularity is to 0, the more efficiently the electrode assembly 1520 is inserted in the case 1510. In Equation (1) above, the radius of the smallest inscribed circle may be the semi-minor axis JR of the electrode assembly 1520, and the radius of the largest inscribed circle may be the radius CR inside the case sidewall portion. According to some embodiments of the present invention, instead of the electrode tabs and cover tape being present on the outer side portion of the electrode assembly, the first substrate tab and the second substrate tab replace the role of electrode tabs. That is, no other components may be located at the outer side portion of the electrode assembly. Thus, the circularity of the electrode assembly according to Equation (1) may be 0 or may be approximately 0.

However, [Equation 1] is merely one formula for evaluating the spatial utilization efficiency of the electrode assembly. If the electrode assembly has a shape other than a cylinder, spatial utilization efficiency may be evaluated in another way. For example, the ratio of the internal area of the electrode assembly to the internal area within the case sidewall portion may be used to evaluate spatial utilization efficiency.

FIG. 16 is a flowchart 1600 illustrating an example of a method of manufacturing a secondary battery according to some embodiments of the present invention. The method may be performed by a secondary battery manufacturing apparatus.

Referring to FIG. 16, according to some embodiments, the method may begin with forming an electrode assembly including a first electrode, a separator, and a second electrode (S1610). Here, the first electrode may function as a positive electrode, and the second electrode may function as a negative electrode.

Next, the method may include electrically connecting the first electrode of the electrode assembly to a terminal plate (S1620). Here, the first electrode to be electrically connected to the terminal plate may include at least one first substrate tab.

Next, the method may include inserting the electrode assembly and the terminal plate into a case including a sidewall portion that surrounds a side surface of the electrode assembly and a cover portion that extends in a horizontal direction from one side of the sidewall portion and is located on the electrode assembly (S1630).

In addition, the method may include coupling a base plate to an opening formed on the other side of the sidewall portion and electrically connecting the second electrode to the base plate (S1640). Here, the second electrode to be electrically connected to the base plate may include at least one second substrate tab.

According to some embodiments, forming the electrode assembly may include forming the first substrate tab, which may involve removing a first portion from a region of the first substrate of the first electrode where the first active material layer is absent, leaving a second portion, and cutting the second portion at regular intervals to form the at least one first substrate tab. A detailed description of this step is provided above with reference to FIGS. 6 and 7.

According to some embodiments, forming the electrode assembly may include forming the second substrate tab, which may involve removing a first portion from a region of the second substrate of the second electrode where the second active material layer is absent, leaving a second portion, and cutting the second portion at regular intervals to form at least one second substrate tab. A detailed description of this step is provided above with reference to FIGS. 8 and 9.

According to some embodiments, electrically connecting the first electrode to the terminal plate may include bending the first substrate tab and welding the bent first substrate tab to the terminal plate. Likewise, a detailed description of this step is provided above with reference to FIGS. 10 and 11.

According to some embodiments, electrically connecting the second electrode to the base plate may include bending the second substrate tab, welding the bent second substrate tab to the base plate, and welding the base plate to the sidewall portion. A detailed description of this step is provided above with reference to FIGS. 12 through 14.

According to some embodiments, the step of inserting may include placing the electrode assembly so that an outer side portion thereof is in close contact with the sidewall portion of the case. FIG. 15 illustrates the electrode assembly and the case, as viewed from the vertical direction, after such insertion. With the electrode assembly thus in close contact, the interior space of the secondary battery may be used more efficiently. Consequently, the amount of electrolyte that can be charged in the secondary battery may increase, and the cell capacity of the secondary battery may increase.

According to some embodiments, the step of inserting may include placing an insulator between the cover portion and the terminal plate, and applying heat to the cover portion and the terminal plate to close the first opening formed at the center of the cover portion. In doing so, it may become possible to prevent or reduce leakage of the electrolyte or other internal components of the secondary battery, and to relatively improve the yield of fully sealed secondary batteries containing the electrode assembly.

The flowchart of FIG. 16 and the above description illustrate only an example of the present invention, and the scope of the present invention is not limited to them. For example, one or more steps of the flowchart and the above description may be added, changed, or omitted; the order of one or more steps may be changed; or one or more steps may be performed simultaneously.

Although the present invention has been described above with reference to embodiments and drawings illustrating aspects thereof, the present invention is not limited thereto. Various modifications and variations can be made by those skilled in the art within the scope of the technical spirit of the present invention and the claims and their equivalents below.

### Description of Some of the Reference Symbols

10: secondary battery
120: case
121: cover portion
122: sidewall portion
140: insulator
160: terminal plate
180: base plate
200: electrode assembly
210: first substrate tab
220: second substrate tab
230: first electrode
240: second electrode

## Claims

1. A secondary battery (10) comprising:
an electrode assembly (200) comprising a first electrode (230), a second electrode (240), and a separator (250) interposed between the first electrode (230) and the second electrode (240);
a case (120) comprising a sidewall portion (122) surrounding a side surface of the electrode assembly (200) and a cover portion (121) extending in a horizontal direction from one side of the sidewall portion (122) on the electrode assembly (200);
a terminal plate (160) that closes a first opening formed at a center of the cover portion (121) and is electrically connected to the first electrode (230); and
a base plate (180) that closes a second opening formed on another side of the sidewall portion (122) and is electrically connected to the second electrode (240),
wherein the first electrode (230) comprises at least one first substrate tab (210) electrically connected to the terminal plate (160), and
wherein the second electrode (240) comprises at least one second substrate tab (220) electrically connected to the base plate (180).

2. The secondary battery (10) as claimed in claim 1,
wherein the first electrode (230) comprises a first coated portion in which a first active material layer is on a first substrate and a first uncoated portion, in which the first active material layer is absent, provided at both ends of the first coated portion,
wherein the second electrode (240) comprises a second coated portion in which a second active material layer is on a second substrate and a second uncoated portion, in which the second active material layer is absent, provided at both ends of the second coated portion,
wherein the at least one first substrate tab (210) protrudes from the first substrate of the first coated portion toward the terminal plate (160), and
wherein the at least one second substrate tab (220) protrudes from the second substrate of the second coated portion toward the base plate (180).

3. The secondary battery (10) as claimed in claim 2,
wherein the at least one first substrate tab (210) comprises a first vertical portion (211) extending in a vertical direction from the first coated portion and a first contact portion (212) bent and extending from the first vertical portion (211), and
wherein the at least one second substrate tab (220) comprises a second vertical portion (221) extending in a vertical direction from the second coated portion and a second contact portion (222) bent and extending from the second vertical portion (221).

4. The secondary battery (10) as claimed in claim 2 or 3,
wherein a length of the first substrate tab (210) in a winding direction of the electrode assembly (200) is shorter than a length of the first coated portion in the winding direction, and
wherein a length of the second substrate tab (220) in the winding direction is shorter than a length of the second coated portion in the winding direction.

5. The secondary battery (10) as claimed in claim 4,
wherein the length of the first substrate tab (210) in the winding direction is shorter than the length of the second substrate tab (220) in the winding direction.

6. The secondary battery (10) as claimed in any one of claims 1 to 5,
wherein the terminal plate (160) overlaps the first substrate tab (210) in a vertical direction, and
wherein the first substrate tab (210) is located inward of the terminal plate (160) in the horizontal direction.

7. The secondary battery (10) as claimed in any one of claims 1 to 6,
wherein the first substrate tab (210) extends closer to the terminal plate (160) than the separator (250) in a vertical direction, and
wherein the second substrate tab (220) extends closer to the base plate (180) than the separator (250) in the vertical direction.

8. The secondary battery (10) as claimed in any one of claims 1 to 7,
further comprising an insulator (140) between the cover portion (121) and the terminal plate (160) and insulating the cover portion (121) and the terminal plate (160).

9. The secondary battery (10) as claimed in any one of claims 1 to 8,
wherein the terminal plate (160) comprises a protrusion inserted into the first opening and a flange portion below the protrusion, and
wherein the flange portion is between the electrode assembly (200) and the cover portion (121).

10. The secondary battery (10) as claimed in any one of claims 1 to 9,
wherein the base plate (180) and the case (120) comprise stainless steel (SUS), and
wherein the terminal plate (160) comprises aluminum (Al).

11. A method of manufacturing a secondary battery (10), the method comprising:
forming an electrode assembly (200, 1520) comprising a first electrode (230), a separator (250), and a second electrode (240);
electrically connecting the first electrode (230) of the electrode assembly (200, 1520) to a terminal plate (160);
inserting the electrode assembly (200, 1520) and the terminal plate (160) into a case (120, 1510) comprising a sidewall portion (122) surrounding a side surface of the electrode assembly (200, 1520) and a cover portion (121) extending in a horizontal direction from one side of the sidewall portion (122) on the electrode assembly (200, 1520); and
coupling a base plate (180) to an opening formed on another side of the sidewall portion (122) and electrically connecting the second electrode (240) to the base plate (180),
wherein the first electrode (230) comprises at least one first substrate tab (210) electrically connected to the terminal plate (160), and
wherein the second electrode (240) comprises at least one second substrate tab (220) electrically connected to the base plate (180).

12. The method as claimed in claim 11,
wherein forming the electrode assembly (200, 1520) comprises forming the first substrate tab (210), and
wherein forming the first substrate tab (210) comprises:
removing a first portion from a region of a first substrate of the first electrode (230) where a first active material layer is absent and leaving a second portion; and
cutting the second portion at regular intervals to form the at least one first substrate tab (210).

13. The method as claimed in claim 11 or 12,
wherein forming the electrode assembly (200, 1520) comprises forming the second substrate tab (220), and
wherein forming the second substrate tab (220) comprises:
removing a first portion from a region of a second substrate of the second electrode (240) where a second active material layer is absent and leaving a second portion; and
cutting the second portion at regular intervals to form the at least one second substrate tab (220).

14. The method as claimed in any one of claims 11 to 13,
wherein electrically connecting the first electrode (230) to the terminal plate (160) comprises:
bending the first substrate tab (210); and
welding the bent first substrate tab (210) to the terminal plate (160).

15. The method as claimed in any one of claims 11 to 14,
wherein electrically connecting the second electrode (240) to the base plate (180) comprises:
bending the second substrate tab (220);
welding the bent second substrate tab (220) to the base plate (180); and
welding the base plate (180) to the sidewall portion (122).
